# EUROPÄISCHE PATENTSCHRIFT

(11) **EP 1 727 719 B1**
(45) Veröffentlichungstag und Bekanntmachung des Hinweises auf die Patenterteilung: **08.05.2013**
(21) Anmeldenummer: 05715084.9
(22) Anmeldetag: 10.03.2005
(51) Int. Cl.: B60T 17/04, B60T 17/02, B60T 11/32

(54) **MAGNETSCHWEBEBAHN MIT EINER DRUCKLUFT-VERSORGUNGSANLAGE**
MAGNETIC LEVITATION TRAIN PROVIDED WITH A COMPRESSED AIR SUPPLY UNIT
TRAIN A SUSTENTATION MAGNETIQUE COMPRENANT UNE INSTALLATION D'ALIMENTATION EN AIR COMPRIME

(30) Priorität: 19.03.2004 DE 102004014037
(43) Veröffentlichungstag der Anmeldung: 06.12.2006
(73) Patentinhaber: ThyssenKrupp Transrapid GmbH, 34127 Kassel (DE)
(72) Erfinder: KUNZ, Siegbert, 83714 Miesbach (DE); HEMPELMANN, Axel, 81541 München (DE)
(74) Vertreter: Lorenz, Bernd Ingo Thaddeus
(86) Internationale Anmeldenummer: PCT/DE2005/000420
(87) Internationale Veröffentlichungsnummer: WO 2005/090135

(56) Entgegenhaltungen:
- DE-B- 1 096 949
- US-A- 2 183 303
- US-A- 2 989 350

## Beschreibung

Die Erfindung betrifft eine Magnetschwebebahn der im Oberbegriff des Anspruchs 1 angegebenen Gattung.

Bei Magnetschwebebahnen dieser Art ist in der Regel jedes einzelne Fahrzeug, auch als Fahrzeugsektion bezeichnet, mit einer Druckluft-Versorgungsanlage versehen, die zur Versorgung verschiedener Verbraucher wie z. B. Luftfedern, Türantrieben, Klimaanlagen od. dgl. dienen. Fällt eine der Druckluft-Versorgungsanlagen aus, ist das betreffende Fahrzeug ohne Druckluft. Werden zur Vermeidung dieses Nachteils und aus Redundanzgründen zwei Druckluft-Versorgungsanlagen pro Fahrzeug vorgesehen, ergibt sich ein hoher Kosten- und Montageaufwand. Ähnliche Einrichtungen sind bei Schienenfahrzeugen bekannt (DE 10 96 949 B), wobei sie allerdings nicht zum direkten Anschluß am Verbraucher, sondern zur Füllung eines die Verbraucher speisenden Druckmittelbehälters dienen.

Entsprechende Probleme ergeben sich, wenn in jedem Fahrzeug eine durchgehende, an eine Druckluft-Versorgungsanlage angeschlossene Druckluftleitung vorhanden ist, die beim Ankoppeln zweier Fahrzeuge ebenfalls miteinander verbunden werden. Wird diese Druckluftleitung defekt, ist der ganze Zug ohne Druckluft.

Das von der Erfindung zu lösende technische Problem besteht darin, bei Magnetschwebebahnen der eingangs bezeichneten Gattung eine Luftdruck-Versorgungsanlage vorzusehen, die bei verhältnismäßig geringem Konstruktions- und Montageaufwand eine hohe Redundanz gewährleistet.

Zur Lösung dieser Aufgabe dienen die kennzeichnenden Merkmale des Anspruchs 1.

Die Erfindung bringt den Vorteil mit sich, daß jedes Fahrzeug mit zwei durchgehenden Druckluftleitungen versehen ist, an die die Verbraucher wahlweise angeschlossen werden können. Dadurch ist es möglich, die Verbraucher beim Ausfall einer Druckluftleitung an die jeweils andere, nicht defekte Druckluftleitung anzuschließen.

Weitere vorteilhafte Merkmale der Erfindung ergeben sich aus den Unteransprüchen.

Die Erfindung wird nachfolgend an einem in den beiliegenden Zeichnungen dargestellten Ausführungsbeispiel näher erläutert. Es zeigen:
Fig. 1 einen schematischen Teilschnitt durch ein übliches Magnetschwebefahrzeug und einen zugehörigen Fahrweg, und
Fig. 2 eine aus vier Fahrzeugen bzw. Sektionen zusammengesetzte Magnetschwebebahn in einer schematischen Draufsicht.

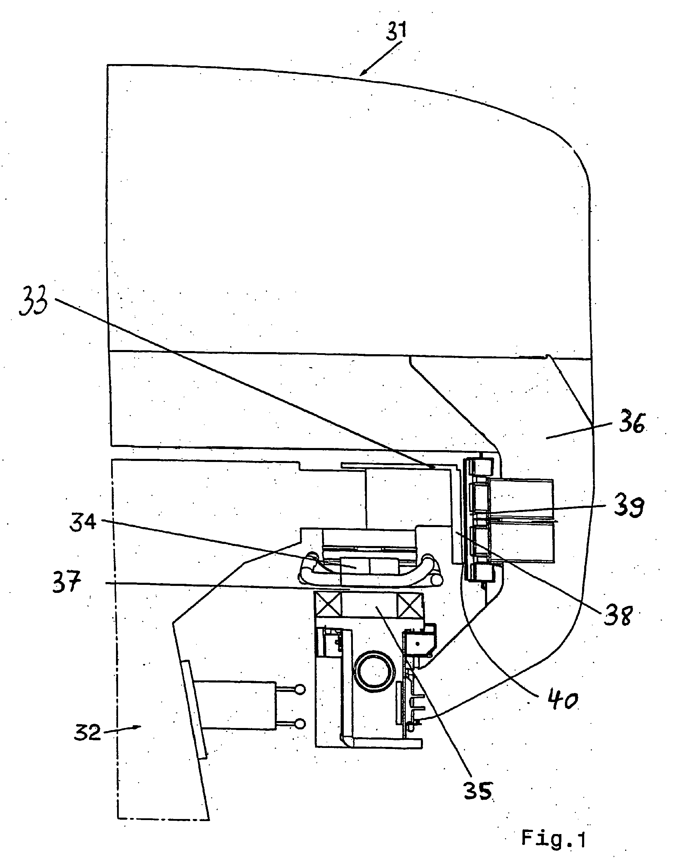

Fig. 1 zeigt im Querschnitt ein Magnetschwebefahrzeug 31, das in üblicher Weise auf einem in Längsrichtung einer Trasse verlaufenden Fahrweg fahrbar montiert ist, der aus Stahl und/oder Beton hergestellte Träger 32 und auf diesen montierte Fahrwegplatten 33 enthält. Der Antrieb des Magnetschwebefahrzeugs 31 erfolgt z. B. mittels eines Langstatormotors, der unterhalb der Fahrwegplatte 33 befestigte, in deren Längsrichtung aufeinander folgende, nicht dargestellte Zähne und Nuten aufweist, in die Wicklungen eingelegt sind, die mit Drehstrom variabler Amplitude und Frequenz gespeist werden. Das eigentliche Erregerfeld des Langstatormotors wird durch wenigstens eine erste, als Tragmagnet 35 wirkende Magnetanordnung erzeugt, die mit wenigstens einem seitlichen Gestellbügel 36 am Magnetschwebefahrzeug 31 befestigt ist und den in Fig. 1 nach unten offenen Nuten der Statorpakete 34 zugewandte Magnetpole aufweist. Der Tragmagnet 35 stellt nicht nur das Erregerfeld bereit, sondern erfüllt auch die Funktion des Tragens und Schwebens, indem er beim Betrieb des Magnetschwebefahrzeugs 31 einen vorgegebenen Spalt 37 von z. B. 10 mm zwischen dem Tragmagneten 35 und dem Fahrweg bzw. dessen Statorpaketen 4 aufrecht erhält.

Zur Spurführung des Magnetschwebefahrzeugs 31 weist die Fahrwegplatte 33 seitlich angebrachte Führschienen 38 auf, denen ebenfalls an den Gestellbügeln 36 montierte Führmagnete 39 gegenüberstehen, die beim Betrieb dazu dienen, zwischen sich und der Führschiene 38 einen dem Spalt 37 entsprechenden Spalt 40 aufrechtzuerhalten.

Magnetschwebefahrzeuge 31 und deren Magnetanordnungen sind dem Fachmann z. B. aus den Druckschriften US-PS 4,698,895, DE 39 28 277 A1 und PCT WO 97/30504 A1 allgemein bekannt.

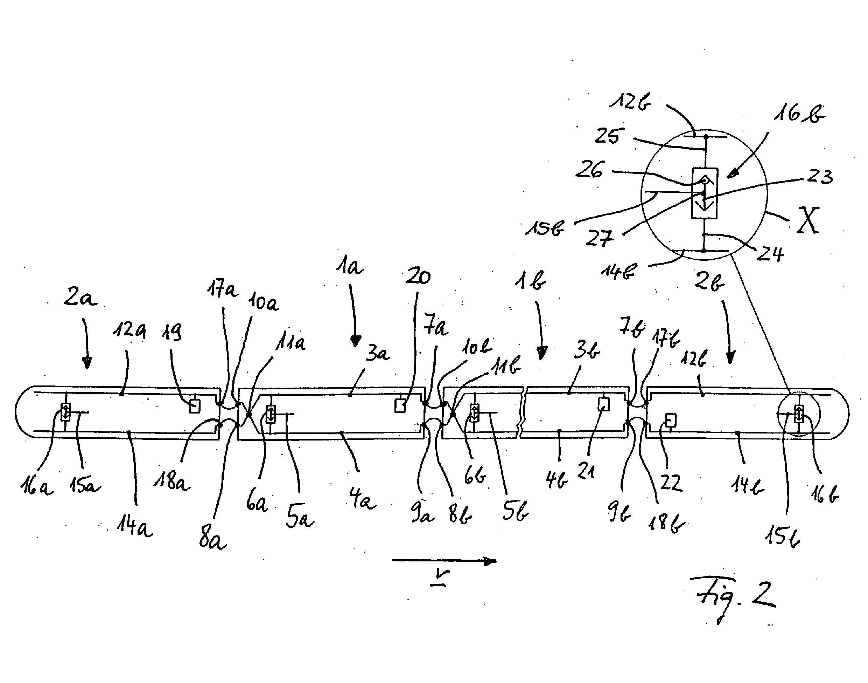

Fig. 2 zeigt ein derzeit für am besten gehaltenes Ausführungsbeispiel der Erfindung. Danach ist eine Magnetschwebebahn mit zwei mittleren Fahrzeugen 1a und 1b und zwei endseitigen Fahrzeugen 2a und 2b dargestellt, wobei alle vier Fahrzeuge 1, 2 zu einem Zug miteinander verbunden sind.

Das Fahrzeug 1a enthält eine Druckluft-Versorgungsanlage, die zwei Druckluftleitungen 3a und 4a aufweist, die sich in Längsrichtung der Magnetschwebebahn durch das Fahrzeug 1a erstrecken. Ferner enthält das Fahrzeug 1a eine Verbraucher-Anschlußleitung 5a, an die wenigstens ein nicht einzeln dargestellter Verbraucher wie z.B. eine Klimaanlage angeschlossen sein kann. Dabei ist die Anordnung erfindungsgemäß so getroffen, daß die Anschlußleitung 5a wahlweise mit der Druckluftleitung 3a oder der Druckluftleitung 4a verbunden werden kann. Die Auswahl der jeweiligen Druckluftleitung 3a, 4a erfolgt vorzugsweise durch Anwendung eines zwischen die Anschlußleitung 5a und die beiden Druckluftleitungen 3a, 4a geschalteten Auswahlventils 6a. Mit besonderen Vorteil handelt es sich hierbei um ein automatisch arbeitendes Auswahlventil 6a, das die Anschlußleitung 5a z.B. stets mit derjenigen der beiden Druckluftleitungen 3a, 4a verbindet, die momentan den höheren Luftdruck hat.

Die Druckluftleitung 3a führt an einem Fahrzeugende zu einem Druckluftanschluß 7a und am anderen Fahrzeugende zu einem Druckluftanschluß 8a. Entsprechend führt die Druckluftleitung 4a an einem Fahrzeugende zu einem Druckluftanschluß 9a und am anderen Fahrzeugende zu einem Druckluftanschluß 10a. Dabei liegt der Anschluß 7a z.B. auf der linken und der Anschluß 9a auf der rechten Fahrzeugseite bei Betrachtung in einer durch einen Pfeil v angegebenen Fahrtrichtung. Dagegen ist es am anderen Fahrzeugende umgekehrt, d.h. hier liegt der zur Druckluftleitung 3a gehörende 8a auf der rechten und der zur Druckluftleitung 4a gehörende Anschluß 10a auf der linken Fahrzeugseite. Das bedeutet, daß sich die beiden Druckluftleitungen 3a und 4a, wie durch eine mit 11 bezeichnete Kreuzungsstelle angedeutet ist, im Fahrzeug 1a irgendwo kreuzen.

Beim Fahrzeug 1b ist die Anordnung zweckmäßig genauso wie beim Fahrzeug 1a. Die entsprechenden Teile sind daher mit denselben Bezugsziffern, jedoch zusätzlich mit den Buchstaben b statt mit den Buchstaben a versehen.

Das endseitige Fahrzeug 2a weist analog zum Fahrzeug 1a zwei Druckluftleitungen 12a und 14a, eine Verbraucher-Anschlußleitung 15a und ein die Ansclußleitung 15a mit den beiden Druckluftleitungen 12a, 14a verbindendes Auswahlventil 16a auf. Das Auswahlventil 16a entspricht in seiner Funktion den Auswahlventilen 6a bzw. 6b.

Ein Druckluftanschluß 17a für die Druckluftleitung 12a liegt an dem dem Fahrzeug 1a zugewandten Fahrzeugende auf der linken Seite, während ein Druckluftanschluß 18a für die Druckluftleitung 14a auf der rechten Seite liegt. Wie von dort die Druckluftleitungen 12a, 14a in Richtung des anderen Endes im Fahrzeug 2a verlegt sind, ist für die Erfindung unbedeutend. Wichtig ist nur, daß beide Druckluftleitungen 12a, 14a an ihren von den Anschlüssen 17a, 18a entfernten Enden abgesperrt sind.

Das Fahrzeug 2b ist schließlich wie das Fahrzeug 2a ausgebildet. Die entsprechenden Teile sind daher mit denselben Bezugsziffern jedoch zusätzlich mit den Buchstaben b statt mit den Buchstaben a versehen. Im Unterschied zu den Fahrzeugen 1a, 1b sind die beiden Fahrzeuge 2a, 2b im Zug spiegelbildlich, d.h. um 180 ° gedreht zueinander angeordnet, so daß die Druckluftanschlüsse 17b, 18b an den dem Fahrzeug 1b zugewandten Ende des Fahrzeugs 2b angeordnet sind.

Im miteinander verkoppelten, aus der Zeichnung ersichtlichen Zustand der vier Fahrzeuge sind die Anschlüsse 10a, 17a bzw. 8a, 18a, ferner 7a, 10b bzw. 9a, 8b und 7b, 17b bzw. 9b, 18b durch bei Magnetschwebebahnen und anderen Fahrzeugen allgemein bekannte Anschlußmittel strömungsmäßig miteinander verbunden. Daher bilden die Druckluftleitungen 12a, 4a, 3b und 12b einerseits und die Druckluftleitungen 14a, 3a, 4b und 14b andererseits je einen durch den ganzen Zug erstreckten, z. B. durch einen geeigneten Druckschlauch, ein Aluminiumrohr od. dgl. gebildeten Druckluftstrang bzw. Strömungskanal.

Wie die Zeichnung weiter zeigt, weist jedes Fahrzeug eine eigene, in ihm selbst angeordnete und z.B. mit einem Betriebsdruck von 10 bar arbeitende Druckluftquelle 19 bis 22 in Form eines aktiven Drucklufterzeugers wie z.B. eines Kompressors auf. Dabei ist der Drucklufterzeuger 19 mit der Leitung 12a , der Drucklufterzeuger 20 mit der Leitung 3a, der Drucklufterzeuger 21 mit der Leitung 3b und schließlich der Drucklufterzeuger 22 mit der Druckluftleitung 14b verbunden. Daraus folgt, daß jeder Druckluftstrang des Zuges zwar in jedem Fahrzeug 1a bis 2b je einen dieser Drucklufterzeuger 19 bis 22 aufweist, diese jedoch, z.B. von links nach rechts in der beiligenden Zeichnung betrachtet, abwechselnd mit dem einen bzw. anderen durchgehenden Druckluftstrang verbunden sind. Die einen Druckluftleitungen 3a, 3b der mittleren Fahrzeuge 1a, 1b werden daher z.B. durch eine im jeweiligen Fahrzeug selbst befindlichen Druckluftquelle 20, 21 gespeist, während die anderen Druckluftleitungen 4a, 4b der Fahrzeuge 1 mit einer Druckluftquelle verbunden sind, die aus einem der Anschlüsse 17a, 8b bzw. 7a, 18b usw. eines Nachbarfahrzeugs 2a, 1b bzw. 1a, 2b bestehen.

Die beschriebene Druckluft-Versorgungsanlage bietet zahlreiche Vorteile.

Zunächst kann ein Druckluftstrang 12a, 4a, 3b, 12b oder 14a, 3a, 4b, 14b völlig ausfallen, ohne daß irgendeines der beteiligten Fahrzeuge 1, 2 ohne Druckluft ist, da die Verbraucher dann einfach auf den noch intakten Druckluftstrang umgeschaltet werden. Insoweit besteht somit für alle beteiligten Fahrzeuge Redundanz.

Weiterhin ist vorteilhaft, daß alle mittleren und alle endseitigen Fahrzeuge 1 bzw. 2 exakt baugleich ausgebildet werden können. Wie die Zeichnung zeigt, sind bei den mittleren Fahrzeugen 1 jeweils z. B. die Auswahlventile 6a, 6b im hinteren und die Drucklufterzeuger 20, 21 im vorderen Fahrzeugteil vorgesehen. Dadurch ergeben sich unabhängig davon, in welcher Reihenfolge diese Fahrzeuge 1 miteinander verbunden werden, keinerlei Unterschiede im Hinblick auf die Versorgung mit Druckluft. Dasselbe gilt für die endseitigen Fahrzeuge 2, die wegen ihrer Ankupplung an das vordere bzw. hintere Zugende jeweils in um 180 ° relativ zueinander gedrehten Stellungen benutzt werden.

Ein weiterer, nicht unbeachtlicher Vorteil der Erfindung besteht im Hinblick auf die Redundaz der verschiedenen Drucklufterzeuger. Selbst wenn in einem Druckluftstrang (z. B. 12a, 4a, 3b, 12b) ein beteiligter Drucklufterzeuger (z.B. 21) ausfällt, wird dieser Strang dennoch von einem der anderen Drucklufterzeuger (z.B. 19) mit Druckluft versorgt.

Schließlich wirkt sich auch ein Druckluftabfall in einem der beiden Druckluftstränge nicht unmittelbar nachteilig für die Verbraucher aus. Die Auswahlventile 6a, 6b, 16a, 16b können im Prinzip manuell betätigbar sein, sind aber vorzugsweise so ausgebildet und/oder eingerichtet, daß sie die Verbraucher-Anschlußleitungen 5a, 5b, 15a und 15b automatisch mit demjenigen Druckluftstrang verbinden, in dem momentan der höhere Luftdruck vorhanden ist.

Ein Ausführungsbeispiel für ein solches Auswahlventil ist in der Vergrößerung X der beiligenden Zeichnung anhand des Auswahlventils 16b dargestellt. Dieses besteht aus einem sogenannten Wechselventil, das einen Druckluft-Durchgang 23 mit zwei an die Druckluftleitungen 12b 14b angeschlossenen, nach Art von Ventilsitzen ausgebildeten Druckluftanschlüssen 24, 25 aufweist, zwischen denen eine Kugel 26 hin- und her verschiebbar gelagert ist. Die Verbraucher-Anschlußleitung 15b ist an eine mittlere Abzweigung 27 des Durchgangs 23 angeschlossen, und die Kugel 26 kann jeweils einen der beiden Anschlüsse 24, 25 absperren. Das Auswahlventil 16b ist dabei nach Art eines doppeltwirkenden Rückschlagventils ausgebildet. Seine Wirkungsweise ist wie folgt:

Befindet sich die Druckleitung 14b momentan auf einem höheren Druck als die Druckluftleitung 12b, dann wird die Kugel 26 automatisch an den Anschluß 25 gedrückt, so daß sie diesen absperrt, wie die Zeichnung zeigt. Die Verbraucher-Anschlußleitung 15b ist dann über die Abzweigung 27 mit der Druckluftleitung 14b verbunden. Sinkt dagegen zu irgendeinem Zeitpunkt der Druck in der Leitung 14b unter den Druck in der Leitung 12b ab, dann wird die Kugel 26 gegen den Anschluß 24 gelegt und dadurch die Verbraucher-Anschlußleitung 15b automatisch über die Abzweigung 27 an die den höheren Druck führende Leitung 12b angeschlossen. Dadurch wird der Verbraucher stets mit dem momentan höchsten Luftdruck versorgt, wobei gleichgültig ist, ob dieser noch dem Betriebsdruck von z. B. 10 bar oder einen tieferen Druck entspricht.

Die anderen Auswahlventile 6a, 6b und 16a sind genauso wie das Auswahlventil 16b ausgebildet.

Die Erfindung ist nicht auf das beschriebene Ausführungsbeispiel beschränkt, das auf vielfache Weise abgewandelt werden könnte. Das gilt zunächst für die Lage der Kreuzungsstellen 11a, 11b und für die Druckluftleitungen 3a und 3b in den Fahrzeugen 1a und 1b. Die Druckluftleitungen 3a, 4a usw. müssen außerdem nicht an den Seiten der Fahrzeuge 1a usw. verlaufen, sondern können im Prinzip an beliebigen Stellen und wie die Anschlüsse 7a bis 10a usw. auch übereinander verlegt sein. Entsprechendes gilt für die Druckluft-Anschlüsse 7 bis 10 bzw. 17 und 18, die zweckmäßig mit jeweils gleichen Abständen zueinander und so angeordnet sind, daß sie beim Aneinanderkoppeln der Fahrzeuge 1, 2 leicht oder auch automatisch miteinander verbunden werden können. Weiter sind die Kreuzungsstellen 11a, 11b nur systematisch dargestellt. Tatsächlich könnten die zugehörigen Druckluftleitungen 3a, 4a usw. mehrfach gekreuzt werden, und zwar im Falle der Fahrzeuge 1 mit einer ungeraden Anzahl und im Fall der Fahrzeuge 2 mit einer geraden Anzahl von Kreuzugsstellen. Unter der Bezeichnung "Kreuzung" soll daher im Rahmen der vorliegenden Erfindung verstanden werden, daß die Leitungen 3, 4 an den jeweils einen Fahrzeugenden entgegengesetzt zu den jeweils anderen Fahrzeugenden angeordnet sind, um dadurch automatisch die beschriebene Wirkung zu erzielen. Weiter können zur Erhöhung der Redundanz weitere Druckluftleitungen und zugehörige Komponenten vorgesehen werden. Außerdem ist klar, daß für den Fall, daß die Magnetschwebebahn nur mit einem der Fahrzeuge 1 bzw. 2 betrieben wird, jeweils an diejenige Druckluftleitung, die in der beiligenden Zeichnung nicht mit einem im Fahrzeug selbst angeordneten Drucklufterzeuger 19 bis 22 verbunden ist, eine zusätzliche Druckluftquelle angeschlossen werden müßte, um die gewünschte Redundanz sicherzustellen. Schließlich versteht sich, daß die beschriebenen Merkmale auch in anderen als den dargestellten und beschriebenen Kombinationen angewendet werden können.

## Patentansprüche

1. Magnetschwebebahn mit mehreren Fahrzeugen (1, 2), in diesen vorgesehenen Druckluft-Versorgungsanlagen und wenigstens je einer Verbraucher-Anschlußleitung (5, 15) in jedem Fahrzeug (1, 2), **dadurch gekennzeichnet, daß** die Druckluft-Versorgungsanlagen wenigstens je zwei Druckluftleitungen (3, 4, 12, 14) aufweisen, die im verkoppelten Zustand der Fahrzeuge (1, 2) zu diesen gemeinsamen Druckluftsträngen miteinander verbunden sind, daß jeder Druckluftstrang an wenigstens je eine Druckluftquelle (z. B. 19 bis 22) angeschlossen ist und daß die Verbraucher-Anschlußleitungen (5, 15) an die eine oder andere Druckluftleitung (3, 4, 12, 14) anschließbar sind.

2. Magnetschwebebahn nach Anspruch 1, **dadurch gekennzeichnet, daß** die Verbraucher-Anschlußleitungen (5, 15) an mit beiden Druckluftleitungen (3, 4, 12, 14) verbundene Auswahlventile (6, 16) angeschlossen sind.

3. Magnetschwebebahn nach Anspruch 2, **dadurch gekennzeichnet, daß** die Verbraucher-Anschlußleitungen (5, 15) durch die Auswahlventile (6, 16) automatisch an die momentan auf einem höheren Druckniveau befindliche Druckluftleitung (3, 4, 12, 14) angeschlossen sind.

4. Magnetschwebebahn nach einem der Ansprüche 1, bis 3, **dadurch gekennzeichnet, daß** das Fahrzeug (1) an einem vorderen und hinteren Ende je zwei, an je eine der Druckluftleitungen (3, 4) angeschlossene Druckluft-Anschlüsse (7 bis 10) aufweist.

5. Magnetschwebebahn nach Anspruch 4, **dadurch gekennzeichnet, daß** die Druckluftleitungen (3, 4,) zwischen dem vorderen und dem hinteren Ende über Kreuz verlegt sind.

6. Magnetschwebebahn nach einem der Ansprüche 1 bis 5, **dadurch gekennzeichnet, daß** die Druckluft-Anschlüsse (7 bis 10) an beiden Enden an denselben Stellen und mit gleichen Abständen angeordnet sind.

7. Magnetschwebebahn nach einem der Ansprüche 1 bis 6 mit wenigstens einem mittleren Fahrzeug (1a, 1b) und zwei mit diesem gekoppelten, endseitigen Fahrzeugen (2a, 2b), **dadurch gekennzeichnet, daß** bei dem mittleren Fahrzeug (1a, 1b) die Druckluftleitungen (3, 4) zwischen dem vorderen und hinteren Ende über Kreuz verlegt sind.

8. Magnetschwebebahn nach Anspruch 7, dadurch gekennzeichent, daß die Druckluftleitungen (12, 14) in den endseitigen Fahrzeugen (2a, 2b) ohne Überkreuzung verlegt sind.

9. Magnetschwebebahn nach einem der Ansrüche 1 bis 8, **dadurch gekennzeichnet, daß** das endseitige Fahrzeug (2) nur an einem Ende mit zwei, an je eine Druckluftleitung (12, 14) angeschlossenen Druckluftanschlüssen (17, 18) versehen ist.

10. Magnetschwebebahn nach einem der Ansprüche 7 bis 9, **dadurch gekennzeichnet, daß** es wenigstens zwei mittlere und zwei endseitige Fahrzeuge (1, 2) aufweist, wobei die Druckluftleitungen (3, 4) bei allen mittleren Fahrzeugen (1) zwischen den vorderen und hinteren Enden über Kreuz, beim vorderen und hinteren Fahrzeug (2) dagegen unverkreuzt verlegt sind.

11. Magnetschwebebahn nach einem der Ansprüche 7 bis 10, **dadurch gekennzeichnet, daß** in jedem Fahrzeug (1, 2) ein Drucklufterzeuger als Druckluftquelle (19 bis 22) vorgesehen ist.

12. Magnetschwebebahn nach einem der Ansprüche 7 bis 11, **dadurch gekennzeichnet, daß** die mittleren und die endseitigen Fahrzeuge (1, 2) unter sich im Hinblick auf die Lage der Druckluftleitungen (3, 4 bzw. 12, 14), Drucklufterzeuger (19 bis 22), Verbraucher-Anschlußleitungen (5, 15) und Auswahlventile (6, 16) jeweils baugleich sind.

13. Magnetschwebebahn nach einem der Ansprüche 7 bis 12, **dadurch gekennzeichnet, daß** in jedem Fahrzeug (1, 2) die eine Druckluftquelle durch einen in demselben Fahrzeug (1, 2) angeordneten Drucklufterzeuger und die andere Druckluftquelle durch wenigstens einen Druckluft-Anschluß (7 bis 10, 17, 18) eines Nachbarfahrzeugs gebildet ist.

14. Magnetschwebebahn nach einem der Ansprüche 2 bis 13, **dadurch gekennzeichnet, daß** die Auswahlventile (6, 16) nach Art von doppelt wirkenden Rückschlagventilen ausgebildet sind.

## Claims

1. A magnetic levitation railway having a plurality of vehicles (1, 2), compressed air supply systems provided in the latter and at least one consumer connection tube (5, 15) in each vehicle (1, 2), **characterised in that** the compressed air supply systems each have at least two compressed air tubes (3, 4, 12, 14), which, when the vehicles (1, 2) are coupled, are connected to each other to form compressed air lines common to the said vehicles, that each compressed air line is attached to at least one compressed air source (e.g. 19 to 22) each, and that the consumer connection tubes (5, 15) can be attached to one or the other compressed air tube (3, 4, 12, 14).

2. The magnetic levitation railway according to Claim 1, **characterised in that** the consumer connection tubes (5, 15) are attached to selector valves (6, 16) which are connected to both compressed air tubes (3, 4, 12, 14).

3. The magnetic levitation railway according to Claim 2, **characterised in that** the consumer connection tubes (5, 15) are attached automatically by the selector valves (6, 16) to the compressed air tube (3, 4, 12, 14) which is currently at a higher pressure level.

4. The magnetic levitation railway according to one of Claims 1 to 3, **characterised in that** the vehicle (1) has in each case two compressed air connections (7 to 10), which are each attached to one of the compressed air tubes (3, 4), at a front and rear end.

5. The magnetic levitation railway according to Claim 4, **characterised in that** the compressed air tubes (3, 4) are laid crosswise between the front and rear ends.

6. The magnetic levitation railway according to one of Claims 1 to 5, **characterised in that** the compressed air connections (7 to 10) are arranged at the same points and with the same spacing at both ends.

7. The magnetic levitation railway according to one of Claims 1 to 6, having at least one central vehicle (1a, 1 b) and having two end vehicles (2a, 2b) coupled thereto, **characterised in that** in the central vehicle (1a, 1 b), the compressed air tubes (3, 4) are laid crosswise between the front and rear ends.

8. The magnetic levitation railway according to Claim 7, **characterised in that** the compressed air tubes (12, 14) are laid without crossing in the end vehicles (2a, 2b).

9. The magnetic levitation railway according to one of Claims 1 to 8, **characterised in that** the end vehicle (2) is only provided at one end with two compressed air connections (17, 18) which are each attached to one compressed air tube (12, 14).

10. The magnetic levitation railway according to one of Claims 7 to 9, **characterised in that** it has at least two central and two end vehicles (1, 2), wherein the compressed air tubes (3, 4) are laid crosswise between the front and rear ends in all the central vehicles (1), but are laid uncrossed in the front and rear vehicles (2).

11. The magnetic levitation railway according to one of Claims 7 to 10, **characterised in that** a compressed air generator is provided as the compressed air source (19 to 22) in each vehicle (1, 2).

12. The magnetic levitation railway according to one of Claims 7 to 11, **characterised in that** the central and end vehicles (1, 2) are each structurally identical to each other with regard to the position of the compressed air tubes (3, 4 and 12, 14), compressed air generators (19 to 22), consumer connection tubes (5, 15) and selector valves (6, 16).

13. The magnetic levitation railway according to one of Claims 7 to 12, **characterised in that** in each vehicle (1, 2), one compressed air source is formed by a compressed air generator arranged in the same vehicle (1, 2) and the other compressed air source is formed by at least one compressed air connection (7 to 10, 17, 18) of an adjacent vehicle.

14. The magnetic levitation railway according to one of Claims 2 to 13, **characterised in that** the selector valves (6, 16) are configured in the manner of double-action check valves.

## Revendications

1. Train à suspension magnétique comportant plusieurs véhicules (1, 2), des installations d'alimentation en air comprimé prévues dans ceux-ci et au moins une ligne de branchement d'appareil consommateur (5, 15) respective dans chaque véhicule (1, 2), **caractérisé en ce que** les installations d'alimentation en air comprimé présentent au moins deux lignes d'air comprimé respectives (3, 4, 12, 14), qui sont reliées l'une à l'autre en l'état couplé des véhicules (1, 2) aux branches d'air comprimé commune à ces derniers, **en ce que** chaque branche d'air comprimé est branché à au moins une source d'air comprimé (par ex. 19 à 22) respective et **en ce que** les lignes de branchement des appareils consommateurs (5, 15) peuvent être branchées à l'une ou l'autre ligne d'air comprimé (3, 4, 12, 14).

2. Train à suspension magnétique selon la revendication 1, **caractérisé en ce que** les lignes de branchement d'appareils consommateurs (5, 15) sont branchées aux valves sélectrices (6, 16) reliées aux deux lignes d'air comprimé (3, 4, 12, 14).

3. Train à suspension magnétique selon la revendication 2, **caractérisé en ce que** les lignes de branchement des appareils consommateurs (5, 15) sont branchées par l'intermédiaire des valves sélectrices (6, 16) automatiquement à la ligne d'air comprimé (3, 4, 12, 14) se trouvant momentanément à un niveau de pression plus élevé.

4. Train à suspension magnétique selon une des revendications 1 à 3, **caractérisé en ce que** le véhicule (1) présente à une extrémité avant et arrière respectivement deux raccords d'air comprimé (7 à 10) branchés à une des lignes d'air comprimé (3, 4).

5. Train à suspension magnétique selon la revendication 4, **caractérisé en ce que** les lignes d'air comprimé (3, 4) sont croisées entre l'extrémité avant et l'extrémité arrière.

6. Train à suspension magnétique selon une des revendications 1 à 5, **caractérisé en ce que** les raccords d'air comprimé (7 à 10) sont disposés aux deux extrémités aux mêmes emplacements et avec des espacements identiques.

7. Train à suspension magnétique selon une des revendications 1 à 6 comportant au moins un véhicule central (1a, 1b) et deux véhicules d'extrémité (2a, 2b) couplés à celui-ci, **caractérisé en ce que** sur le véhicule central (1a, 1b) les lignes d'air comprimé (3, 4) sont croisées entre l'extrémité avant et l'extrémité arrière.

8. Train à suspension magnétique selon la revendication 7, **caractérisé en ce que** les lignes d'air comprimé (12, 14) sont placées sans enjambement dans les véhicules d'extrémité (2a, 2b).

9. Train à suspension magnétique selon une des revendications 1 à 8, **caractérisé en ce que** le véhicule d'extrémité (2) est pourvu à une extrémité de deux raccords d'air comprimé (17, 18) branchés à respectivement une ligne d'air comprimé (12, 14).

10. Train à suspension magnétique selon une des revendications 7 à 9, **caractérisé en ce que** il présente au moins deux véhicules centraux et deux véhicules d'extrémité (1, 2), dans lequel les lignes d'air comprimé (3, 4) sur tous les véhicules centraux (1) sont croisées entre les extrémités avant et arrière et sont au contraire décroisées sur le véhicule avant et arrière (2).

11. Train à suspension magnétique selon une des revendications 7 à 10, **caractérisé en ce que** dans chaque véhicule (1, 2) un générateur d'air comprimé est prévu comme source d'air comprimé (19 à 22).

12. Train à suspension magnétique selon une des revendications 7 à 11, **caractérisé en ce que** les véhicules centraux et d'extrémité (1, 2) sont respectivement identiques entre eux en ce qui concerne la position des lignes d'air comprimé (3, 4 resp. 12, 14), des générateurs d'air comprimé (19 à 22), de lignes de branchement des appareils consommateurs (5, 15) et des valves sélectrices (6, 16).

13. Train à suspension magnétique selon une des revendications 7 à 12, **caractérisé en ce que** dans chaque véhicule (1, 2) une des sources d'air comprimé est formée par un générateur d'air comprimé disposé dans le même véhicule (1, 2) et l'autre source d'air comprimé est formée par au moins un raccord d'air comprimé (7 à 10, 17, 18) d'un véhicule voisin.

14. Train à suspension magnétique selon une des revendications 2 à 13, **caractérisé en ce que** les valves sélectrices (6, 16) sont conçues à la manière de clapets anti-retour à double action.
